(19) Europäisches Patentamt
European Patent Office
Office européen des brevets

(11) **EP 2 736 995 B1**

(12) **FASCICULE DE BREVET EUROPEEN**

(45) Date de publication et mention de la délivrance du brevet:
**11.04.2018 Bulletin 2018/15**

(21) Numéro de dépôt: **12748747.8**

(22) Date de dépôt: **27.07.2012**

(51) Int Cl.:
***C03C 25/26*** *(2018.01)*      ***C03C 25/32*** *(2018.01)*

(86) Numéro de dépôt international:
**PCT/FR2012/051787**

(87) Numéro de publication internationale:
**WO 2013/014399 (31.01.2013 Gazette 2013/05)**

(54) **COMPOSITION D'ENCOLLAGE POUR LAINE MINERALE A BASE DE MALTITOL ET PRODUITS ISOLANTS OBTENUS**

AUF MALTITOL BASIERENDE HAFTMITTEL-ZUSAMMENSETZUNG FÜR MINERALWOLLE UND DARAUS HERGESTELLTE DÄMMSTOFFE

SIZING COMPOSITION FOR MINERAL WOOL BASED ON MALTITOL AND INSULATION PRODUCTS THEREFROM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **27.07.2011 FR 1102369**

(43) Date de publication de la demande:
**04.06.2014 Bulletin 2014/23**

(73) Titulaire: **Saint-Gobain Isover**
**92400 Courbevoie (FR)**

(72) Inventeurs:
• **JAFFRENNOU, Boris**
  **F-75019 Paris (FR)**
• **OBERT, Edouard**
  **60700 Fleurines (FR)**

(74) Mandataire: **Saint-Gobain Recherche**
**Département Propriété Industrielle**
**39 Quai Lucien Lefranc**
**93300 Aubervilliers (FR)**

(56) Documents cités:
**WO-A1-2009/040415      WO-A1-2010/029266**

**Description**

La présente invention se rapporte au domaine des produits d'isolation, thermiques et/ou acoustiques, à base de laine minérale, notamment de verre ou de roche, et d'un liant organique exempt de formaldéhyde.

L'invention concerne plus particulièrement une composition d'encollage apte à réticuler thermiquement pour former ledit liant organique, qui renferme du maltitol et au moins un agent de réticulation polyfonctionnel, et les produits isolants qui en résultent.

La fabrication de produits d'isolation à base de laine minérale comprend généralement une étape de fabrication de la laine elle-même, qui peut être mise en oeuvre par différents procédés, par exemple selon la technique connue du fibrage par centrifugation interne ou externe.

La centrifugation interne consiste à introduire la matière minérale en fusion (verre ou roche) dans un dispositif centrifuge comprenant une multitude de petits orifices, la matière étant projetée vers la paroi périphérique du dispositif sous l'action de la force centrifuge et s'en échappant sous la forme de filaments. A la sortie du dispositif centrifuge, les filaments sont étirés et entraînés vers un organe récepteur par un courant gazeux ayant une température et une vitesse élevées, pour former une nappe de fibres (ou laine minérale).

La centrifugation externe consiste, quant à elle, à déverser la matière en fusion à la surface périphérique externe d'organes rotatifs appelés rotors, d'où la fusion est éjectée sous l'action de la force centrifuge. Des moyens d'étirage par courant gazeux et de collecte sur un organe de réception sont également prévus.

Pour assurer l'assemblage des fibres entre elles et permettre à la nappe d'avoir de la cohésion, on projette sur les fibres, sur le trajet allant de la sortie du dispositif centrifuge vers l'organe récepteur, une composition d'encollage contenant une résine thermodurcissable. La nappe de fibres revêtues de l'encollage est soumise à un traitement thermique, à une température généralement supérieure à 100°C, afin d'effectuer la polycondensation de la résine et obtenir ainsi un produit d'isolation thermique et/ou acoustique ayant des propriétés spécifiques, notamment une stabilité dimensionnelle, une résistance à la traction, une reprise d'épaisseur après compression et une couleur homogène.

La composition d'encollage à projeter sur la laine minérale se présente généralement sous la forme d'une solution aqueuse renfermant la résine thermodurcissable et des additifs tels qu'un catalyseur de réticulation de la résine, un silane promoteur d'adhérence, une huile minérale anti-poussières, ... La composition d'encollage est le plus souvent appliquée sur les fibres par pulvérisation.

Les propriétés de la composition d'encollage dépendent en grande partie des caractéristiques de la résine. Du point de vue de l'application, il est nécessaire que la composition d'encollage présente une bonne aptitude à la pulvérisation et puisse se déposer à la surface des fibres afin de les lier efficacement.

La résine doit être stable pendant un laps de temps donné avant d'être utilisée pour former la composition d'encollage, laquelle composition est généralement préparée au moment de l'emploi en mélangeant la résine et les additifs mentionnés précédemment.

Sur le plan réglementaire, il est nécessaire que la résine soit considérée comme non polluante, c'est-à-dire qu'elle contienne - et qu'elle génère lors de l'étape d'encollage ou ultérieurement - le moins possible de composés pouvant nuire à la santé humaine ou à l'environnement.

Les résines thermodurcissables les plus couramment utilisées sont des résines phénoliques appartenant à la famille des résols. Outre leur bonne aptitude à réticuler dans les conditions thermiques précitées, ces résines sont solubles dans l'eau, possèdent une bonne affinité pour les fibres minérales, notamment en verre, et sont relativement peu coûteuses.

Ces résols sont obtenus par condensation de phénol et de formaldéhyde, en présence d'un catalyseur basique, dans un rapport molaire formaldéhyde/phénol supérieur à 1 de manière à favoriser la réaction entre le phénol et le formaldéhyde et à diminuer le taux de phénol résiduel dans la résine. La réaction de condensation entre le phénol et le formaldéhyde est opérée en limitant le degré de condensation des monomères, pour éviter la formation de chaînes longues, peu hydrosolubles, qui réduisent la diluabilité. En conséquence, la résine contient une certaine proportion de monomère n'ayant pas réagi, en particulier le formaldéhyde dont la présence n'est pas souhaitée à cause de ses effets nocifs avérés.

Pour cette raison, les résines à base de résol sont généralement traitées par de l'urée qui réagit avec le formaldéhyde libre en le piégeant sous forme de condensats urée-formaldéhyde non volatils. La présence d'urée dans la résine apporte en outre un avantage économique certain du fait de son faible coût, car on peut l'introduire en relativement grande quantité sans affecter les qualités d'emploi de la résine, notamment sans nuire aux propriétés mécaniques du produit final, ce qui abaisse notablement le coût total de la résine.

Il a néanmoins été observé que, dans les conditions de températures auxquelles la nappe est soumise pour obtenir la réticulation de la résine, les condensats urée-formaldéhyde ne sont pas stables ; ils se décomposent en redonnant du formaldéhyde et de l'urée (à son tour dégradée au moins partiellement en ammoniac) qui sont libérés dans l'atmosphère de l'usine.

La réglementation en matière de protection de l'environnement devenant plus contraignante oblige les fabricants de produits d'isolation à rechercher des solutions permettant d'abaisser encore les niveaux d'émissions indésirables, en particulier de formaldéhyde.

Des solutions de remplacement des résols dans les compositions d'encollage sont connues et se fondent sur l'emploi d'un polymère d'acide carboxylique, notamment d'acide acrylique.

Dans US 5 340 868, l'encollage comprend un polymère polycarboxylique, un β-hydroxyiamide et un acide carboxylique monomérique au moins trifonctionnel.

Il a été proposé des compositions d'encollage comprenant un polymère polycarboxylique, un polyol et un catalyseur, lequel catalyseur est un catalyseur contenant du phosphore (US 5 318 990, US 5 661 213, US 6331 350, US 2003/0008978), un fluoroborate (US 5 977 232) ou bien un cyanamide, un dicyanamide ou une cyanoguanidine (US 5 932 689).

Il a aussi été décrit des compositions d'encollage comprenant une alcanolamine renfermant au moins deux groupements hydroxyle et un polymère polycarboxylique (US 6 071 994, US 6 099 773, US 6 146 746) associé à un copolymère (US 6 299 936).

Dans US 2002/0091185, le polymère polycarboxylique et le polyol sont utilisées en quantités telles que le rapport du nombre d'équivalents de groupes OH au nombre d'équivalents de groupes COOH varie de 0,6/1 à 0,8/1.

Dans US 2002/0188055, la composition d'encollage comprend un polymère polycarboxylique, un polyol et un tensioactif cationique, amphotère ou non ionique.

Dans US 2004/0002567, la composition d'encollage renferme un polymère polycarboxylique, un polyol et un agent de couplage de type silane.

Dans US 2005/0215153, il est décrit un encollage formé à partir d'un pré-liant contenant un polymère d'acide carboxylique et un polyol, et d'une dextrine en tant que co-liant.

Il est décrit dans WO 2006/120523 une composition d'encollage qui comprend (a) un poly(alcool vinylique), (b) un agent de réticulation multifonctionnel choisi parmi les polyacides non polymériques ou leurs sels, les anhydrides ou un polyaldéhyde non polymérique et (c) éventuellement un catalyseur, le rapport pondéral (a):(b) variant de 95:5 à 35:65 et le pH étant au moins égal à 1,25.

On connaît de WO 2008/053332 une composition d'encollage qui comprend un adduit (a) d'un polymère de sucre et (b) d'un agent de réticulation multifonctionnel choisi parmi les polyacides monomériques ou leurs sels, et les anhydrides, qui est obtenu dans des conditions telles que le rapport pondéral (a):(b) varie de 95:5 à 35:65.

On connaît aussi de WO 2010/029266 une composition d'encollage qui comprend au moins un sucre hydrogéné et un agent de réticulation polyfonctionnel.

La présente invention a pour but d'améliorer de telles compositions d'encollage et les produits obtenus à partir de ces compositions.

Un autre but est de fournir une composition d'encollage qui combine de bonnes performances en termes de résistance à la traction et de reprise d'épaisseur.

Un autre but est de fournir une composition d'encollage qui permet de fabriquer des produits isolants de couleur blanche.

Pour atteindre ces buts, la présente invention se base sur la sélection d'un mélange de sucres hydrogénés contenant au moins 25 % en poids de maltitol, calculé sur la base des matières sèches des sucres hydrogénés.

A cet égard, l'invention a pour objet une composition d'encollage en particulier pour des produits isolants à base de laine minérale, notamment de verre ou de roche, qui comprend

- un mélange de sucres hydrogénés contenant au moins 25 % en poids de maltitol, calculé sur la base des matières sèches des sucres hydrogénés, et
- au moins un agent de réticulation polyfonctionnel.

De préférence, le mélange de sucres hydrogénés est constitué majoritairement (à plus de 50 % en poids) de maltitol calculé sur la base des matières sèches des sucres hydrogénés, et avantageusement au plus 85 % en poids.

Par « sucre hydrogéné » on entend ici l'ensemble des produits résultant de la réduction, de quelque manière que ce soit, d'un sucre choisi parmi les monosaccharides, les oligosaccharides et les polysaccharides linéaires, cycliques ou ramifiés, et les mélanges de ces produits, notamment les hydrolysats d'amidon.

Les hydrolysats d'amidon selon l'invention sont obtenus de manière connue en soi, par exemple par hydrolyse enzymatique et/ou acide. Le degré d'hydrolyse de l'amidon est généralement caractérisé par l'équivalent en dextrose, aussi dénommé « Dextrose-Equivalent » (DE) en anglais, défini par la relation suivante :

$$DE = 100 \times \left( \frac{\text{nombre de liaisons glycosidiques rompues}}{\text{nombre de liaisons glycosidiques dans l'amidon initial}} \right)$$

Le DE des hydrolysats d'amidon varie selon le mode d'hydrolyse utilisé (type d'enzyme(s) par exemple) et le degré d'hydrolyse : la distribution en produits de différents degrés de polymérisation peut varier dans une large mesure.

Les hydrolysats d'amidon préférés ont un DE compris entre 5 et 99, et avantageusement entre 10 et 80.

L'hydrogénation du sucre peut être effectuée par les méthodes connues opérant dans des conditions de pression d'hydrogène et de température élevées, en présence d'un catalyseur choisi dans les groupes IB, IIB, IVB, VI, VII et VIII du tableau périodique des éléments, de préférence dans le groupe comprenant le nickel, le platine, le palladium, le cobalt, le molybdène et leurs mélanges. Le catalyseur préféré est le nickel de Raney. L'hydrogénation transforme le sucre ou le mélange de sucres (hydrolysat d'amidon) en polyol(s) correspondants.

Bien que n'étant pas préférée, l'hydrogénation peut être mise en oeuvre en l'absence de catalyseur d'hydrogénation, en présence d'une source d'hydrogène autre que le gaz hydrogène, par exemple un borohydrure de métal alcalin tel que le borohydrure de sodium.

A titre d'exemples de sucres hydrogénés, on peut citer l'érythritol, l'arabitol, le xylitol, le sorbitol, le mannitol, l'iditol, l'isomaltitol, le lactitol, le cellobitol, le palatinitol, le maltotritol et les produits d'hydrogénation d'hydrolysats d'amidon. De préférence, on utilise les produits d'hydrogénation d'hydrolysats d'amidon.

Le mélange de sucres hydrogénés conforme à l'invention peut contenir des sucres réducteurs en proportion faible qui n'excède pas 5 % en poids (de matières sèches), de préférence 1 % et mieux encore 0,5 %.

Dans une variante de l'invention, le mélange de sucres hydrogénés renferme au plus 11 % en poids de sorbitol calculé sur la base des matières sèches des sucres hydrogénés, de préférence au plus 9 %, avantageusement au plus 8 %, mieux encore au plus 6 % et de manière particulièrement préférée au plus 4 %.

L'agent de réticulation polyfonctionnel est apte à réagir avec les groupes hydroxyles des sucres hydrogénés sous l'effet de la chaleur pour former des liaisons esters qui conduisent à l'obtention d'un réseau polymérique dans le liant final. Ledit réseau polymérique permet d'établir des liaisons au niveau des points de jonction des fibres dans la laine minérale.

L'agent de réticulation polyfonctionnel est choisi parmi les acides organiques polycarboxyliques ou les sels de ces acides, les anhydrides et les polyaldéhydes.

Par « acide organique polycarboxylique », on entend un acide organique comprenant au moins deux fonctions carboxyliques, de préférence au plus 300, avantageusement au plus 70, et mieux encore au plus 15 fonctions carboxyliques.

L'acide organique polycarboxylique peut être un acide non polymérique ou polymérique ; il présente une masse molaire en nombre en général inférieure ou égale à 50000, de préférence inférieure ou égale à 10000 et avantageusement inférieure ou égale à 5000.

L'acide organique polycarboxylique non polymérique est un acide acyclique, ramifié ou non, saturé ou insaturé, un acide cyclique ou un acide aromatique.

L'acide organique polycarboxylique non polymérique peut être un acide dicarboxylique, par exemple l'acide oxalique, l'acide malonique, l'acide succinique, l'acide glutarique, l'acide adipique, l'acide pimélique, l'acide subérique, l'acide azelaïque, l'acide sébacique, l'acide malique, l'acide tartrique, l'acide tartronique, l'acide aspartique, l'acide glutamique, l'acide fumarique, l'acide itaconique, l'acide maléique, l'acide traumatique, l'acide camphorique, l'acide phtalique et ses dérivés, notamment contenant au moins un atome de bore ou de chlore, l'acide tétrahydrophtalique et ses dérivés, notamment contenant au moins un atome de chlore tel que l'acide chlorendique, l'acide isophtalique, l'acide téréphtalique, l'acide mésaconique et l'acide citraconique ; un acide tricarboxylique, par exemple l'acide citrique, l'acide tricarballylique, l'acide 1,2,4-butanetricarboxylique, l'acide aconitique, l'acide hémimellitique, l'acide triméllitique et l'acide trimésique ; un acide tétracarboxylique, par exemple l'acide 1,2,3,4-butanetétracarboxylique et l'acide pyroméllitique. On préfère l'acide citrique.

A titre d'exemple d'acide organique polycarboxylique polymérique, on peut citer les homopolymères d'acide carboxylique insaturé tel que l'acide (méth)acrylique, l'acide crotonique, l'acide isocrotonique, l'acide maléique, l'acide cinnamique, l'acide 2-méthylmaléique, l'acide fumarique, l'acide itaconique, l'acide 2-méthylitaconique, l'acide $\alpha,\beta$-méthylèneglutarique (ou acide pent-2-ène dioïque) et les monoesters d'acide dicarboxylique insaturés, tels que les maléates et les fumarates d'alkyle en $C_1$-$C_{10}$, et les copolymères d'au moins un acide carboxylique insaturé précité et d'au moins un monomère vinylique tel que le styrène substitué ou non par des groupements alkyle, hydroxyle ou sulfonyle, ou par un atome d'halogène, le (méth)acrylonitrile, le (méth)acrylamide ou non par des groupements alkyle en $C_1$-$C_{10}$, les alkyl (méth)acrylates, notamment le (méth)acrylate de méthyle, le (méth)acrylate d'éthyle, le (méth)acrylate de n-butyle et le (méth)acrylate d'isobutyle, le (méth)acrylate de glycidyle, le butadiène et un ester vinylique, notamment l'acétate de vinyle.

De préférence, la composition d'encollage comprend au moins un acide organique polycarboxylique non polymérique ayant une masse molaire en nombre inférieure ou égale à 1000, de préférence inférieure ou égale à 750 et avantageusement inférieure ou égale à 500, éventuellement en mélange avec au moins un acide organique polymérique.

L'agent de réticulation polyfonctionnel peut être un anhydride, notamment l'anhydride maléique, l'anhydride succinique ou l'anhydride phtalique. Toutefois, l'ajout d'un anhydride dans la composition d'encollage fait chuter fortement le pH ce qui entraîne des problèmes de corrosion des installations dans la ligne de fabrication et d'hydrolyse du(des) sucre(s) hydrogéné(s). L'introduction d'une base permet d'amener le pH de la composition d'encollage à une valeur suffisante pour éviter ces problèmes. Le coût lié à l'ajout supplémentaire de la base fait que l'usage d'anhydride n'est pas préféré.

L'agent de réticulation polyfonctionnel peut encore être un polyaldéhyde.

Par « polyaldéhyde », on entend un aldéhyde comprenant au moins deux fonctions aldéhyde.

De préférence, le polyaldéhyde est un dialdéhyde non polymérique, par exemple le glyoxal, le glutaraldéhyde, le 1,6-hexanedial ou le dialdéhyde 1,4-téréphtalique.

Les polyaldéhydes ont une très grande réactivité vis-à-vis des groupes hydroxyle des sucres hydrogénés mais aussi des groupes hydroxyle en général ce qui peut présenter des inconvénients, notamment une diminution de la stabilité et/ou une pré-gélification de la composition d'encollage avant le traitement de réticulation thermique. Pour prévenir ces inconvénients, les fonctions aldéhyde du polyaldéhyde sont avantageusement bloquées pour empêcher la réaction avec les constituants présents dans la composition d'encollage avant l'entrée de la laine minérale dans l'étuve. A titre d'exemple d'agent qui permet le blocage des fonctions aldéhyde, on peut citer l'urée et les urées cycliques.

Dans la composition d'encollage, les sucres hydrogénés représentent 10 à 90 % du poids du mélange constitué par les sucres hydrogénés et l'agent de réticulation polyfonctionnel, de préférence plus de 20 %, notamment 20 à 85 %, et mieux encore de 30 à 80 %.

La composition d'encollage peut comprendre en outre un catalyseur, acide ou basique, qui a notamment pour fonction d'ajuster la température de début de réticulation.

Le catalyseur peut être choisi parmi les bases et les acides de Lewis, tels que les argiles, la silice colloïdale ou non, les amines organiques, les amines quaternaires, les oxydes métalliques, les sulfates métalliques, les chlorures métalliques, les sulfates d'urée, les chlorures d'urée et les catalyseurs à base de silicates.

Le catalyseur peut également être un composé contenant du phosphore, par exemple un sel d'hypophosphite de métal alcalin, un phosphite de métal alcalin, un polyphosphate de métal alcalin, un hydrogénophosphate de métal alcalin, un acide phosphorique ou un acide alkylphosphonique. De préférence, le métal alcalin est le sodium ou le potassium.

Le catalyseur peut encore être un composé contenant du fluor et du bore, par exemple l'acide tétrafluoroborique ou un sel de cet acide, notamment un tétrafluoroborate de métal alcalin tel que le sodium ou le potassium, un tétrafluoroborate de métal alcalino-terreux tel que le calcium ou le magnésium, un tétrafluoroborate de zinc et un tétrafluoroborate d'ammonium.

De préférence, le catalyseur est l'hypophosphite de sodium, le phosphite de sodium et les mélanges de ces composés.

La quantité de catalyseur introduite dans la composition d'encollage peut représenter jusqu'à 20 % du poids des sucres hydrogénés et de l'agent de réticulation polyfonctionnel, de préférence jusqu'à 10 %, et avantageusement est au moins égale à 1 %.

La composition d'encollage conforme à l'invention peut comprendre en outre les additifs conventionnels ci-après dans les proportions suivantes calculées sur la base de 100 parts en poids des sucres hydrogénés et d'agent de réticulation polyfonctionnel :

- 0 à 2 parts de silane, en particulier un aminosilane,
- 0 à 20 parts d'huile, de préférence 4 à 15 parts,
- 0 à 5 parts d'un agent hydrophobe, en particulier un silicone,
- 0 à 20 parts d'un polyol différent des sucres hydrogénés,
- 0 à 30 parts d'urée, de préférence 0 à 20 parts,
- 0 à 30 parts d'un « extendeur » choisi parmi les dérivés de la lignine tels que le lignosulfonate d'ammonium (LSA) ou le lignosulfonate de sodium, et les protéines animales ou végétales.

Le rôle des additifs est connu et brièvement rappelé : le silane est un agent de couplage entre les fibres et le liant, et joue également le rôle d'agent anti-vieillissement ; les huiles sont des agents anti-poussières et hydrophobes ; l'urée joue le rôle de plastifiant et permet en outre d'ajuster le temps de gel de la composition d'encollage afin d'éviter les problèmes de pré-gélification ; l'« extendeur » est une charge organique soluble ou dispersable dans la composition d'encollage qui permet notamment de diminuer le coût de celle-ci.

Le polyol ajouté en tant qu'additif est nécessairement différent des sucres hydrogénés ; notamment, on exclut les polyols se présentant sous la forme de polymères comprenant des motifs non saccharidiques tels que les polymères et les copolymères d'alcool vinylique.

La préparation de la composition d'encollage est effectuée par simple mélange des constituants précités.

La composition d'encollage obtenue présente un pH acide, de l'ordre de 1 à 4 qui est de préférence maintenu à une valeur au moins égale à 1,5, avantageusement au moins égale à 3 de manière à limiter les problèmes de corrosion de la ligne de fabrication des produites isolants à base de laine minérale. L'ajustement du pH peut être réalisé en ajoutant une base à la composition d'encollage, notamment une base azotée telle que la triéthanolamine ou l'hydroxyde d'ammonium, ou un hydroxyde de sodium ou de potassium.

Lorsque l'agent de réticulation polyfonctionnel est un polyacide non polymérique, il peut être avantageux de soumettre la composition d'encollage à un traitement thermique de manière à faire réagir une partie des sucres hydrogénés avec ledit polyacide. Grâce à ce traitement thermique, la teneur en polyacides libres de faible masse molaire dans la composition d'encollage est réduite, ce qui a pour effet de limiter les émissions gazeuses générées lors de la cuisson de l'encollage dans l'étuve. Le traitement thermique est effectué à une température pouvant aller de 40 à 130°C.

La composition d'encollage est destinée à être appliquée sur des fibres minérales, notamment des fibres de verre ou de roche.

De manière classique, la composition d'encollage est projetée sur les fibres minérales à la sortie du dispositif centrifuge et avant leur collecte sur l'organe récepteur sous la forme d'une nappe de fibres qui est ensuite traitée à une température permettant la réticulation de l'encollage et la formation d'un liant infusible. La réticulation de l'encollage selon l'invention se fait à une température comparable à celle d'une résine formophénolique classique, à une température supérieure ou égale à 110°C, de préférence supérieure ou égale à 130°, et avantageusement supérieure ou égale à 140°C.

Les produits isolants acoustiques et/ou thermiques obtenus à partir de ces fibres encollées constituent aussi un objet de la présente invention.

Ces produits se présentent généralement sous la forme d'un matelas ou d'un feutre de laine minérale, de verre ou de roche, ou encore d'un voile de fibres minérales, également de verre ou de roche, destiné notamment à former un revêtement de surface dudit matelas ou dudit feutre. Ces produits présentent une couleur blanche particulièrement avantageuse.

En outre, les produits isolants présentent une grande résistance au développement de microorganismes, notamment de moisissures, qui est due au caractère non-fermentescible des sucres hydrogénés.

Les exemples qui suivent permettent d'illustrer l'invention sans toutefois la limiter.

Dans ces exemples, on mesure :

➢ Sur la composition d'encollage

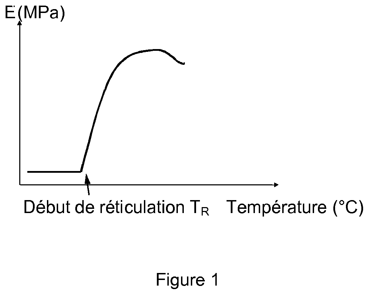

- la température de début de réticulation ($T_R$) par la méthode Dynamic Mechanical Analysis (DMA) qui permet de caractériser le comportement viscoélastique d'un matériau polymérique. On procède comme suit : un échantillon de papier Whatmann est imprégné de la composition d'encollage (teneur en matières solides organiques de l'ordre de 40 %) puis est fixé horizontalement entre deux mors. Un élément oscillant muni d'un dispositif de mesure de la contrainte en fonction de la déformation appliquée est disposé sur la face supérieure de l'échantillon. Le dispositif permet de calculer le module d'élasticité E'. L'échantillon est chauffé à une température variant de 20 à 250°C à la vitesse de 4°C/min. A partir des mesures, on établit la courbe de variation du module d'élasticité E' (en MPa) en fonction de la température (en °C) dont l'allure générale est donnée dans la Figure 1. On détermine sur la courbe les valeurs correspondant à la température de début de réticulation ($T_R$), en °C.

- la viscosité, exprimée en mPa.s, à l'aide d'un rhéomètre de type rotationnel plan-plan avec un cisaillement de 100 s$^{-1}$, à 25°C. L'échantillon a une teneur en matières solides égale à 40 % en poids.

➢ Sur le produit d'isolation

- la résistance en traction est mesurée selon la norme ASTM C 686-71T sur un échantillon découpé par estampage dans le produit isolant. L'échantillon a la forme d'un tore de 122 mm de longueur, 46 mm de largeur, un rayon de courbure de la découpe du bord extérieur égal à 38 mm et un rayon de courbure de la découpe du bord intérieur égal à 12,5 mm.

L'échantillon est disposé entre deux mandrins cylindriques d'une machine d'essais dont l'un est mobile et se déplace à vitesse constante. On mesure la force de rupture F (en Newton) de l'échantillon et on calcule la résistance en traction RT définie par le rapport de la force de rupture F à la masse de l'échantillon.

La résistance en traction est mesurée après la fabrication (résistance en traction initiale) et après un vieillissement accéléré dans un autoclave à une température de 105°C sous 100 % d'humidité relative pendant 15 minutes (RT15).

- l'épaisseur initiale du produit d'isolation et l'épaisseur après 24 heures, 12 jours, 1 mois et 3 mois sous compression avec un taux de compression (défini comme étant le rapport de l'épaisseur nominale à l'épaisseur sous compression) égal à 8/1. Les mesures d'épaisseur permettent d'évaluer la bonne tenue dimensionnelle du produit.
- l'absorption d'eau dans les conditions de la norme EN 1609, exprimée en kg d'eau absorbée par $m^2$ de produit isolant. Les produits d'isolation présentant une absorption d'eau inférieure à 1 kg/$m^2$ sont considérés comme ayant une faible absorption d'eau à court terme (24 heures) : ils appartiennent à la classe « WS » selon la certification ACERMI.

## EXEMPLES 1 A 6

On prépare des compositions d'encollage comprenant les constituants figurant dans le tableau 1 exprimé en parts pondérales.

Les compositions d'encollage sont préparées en introduisant successivement dans un récipient le(s) sucre(s) hydrogéné(s), l'acide citrique et l'hypophosphite de sodium (catalyseur) sous une agitation vigoureuse jusqu'à dissolution complète des constituants.

Les propriétés des compositions d'encollage figurant dans le tableau 1 sont évaluées comparativement à une composition d'encollage classique renfermant une résine formophénolique et de l'urée (Référence) préparée conformément à l'exemple 2, essai 1 de WO 01/96254 A1, d'une part, et à une composition dont le mélange de sucres hydrogénés contient 12 % de maltitol, 12 % de sorbitol et 76 % d'autres sucres hydrogénés (Polysorb® 70/12 commercialisé par ROQUETTE).

Les compositions d'encollage des exemples 2 à 5 présentent une température de début de réticulation ($T_R$) plus faible que celle de la Référence et des exemples 1 et 6 comparatifs.

Les compositions des exemples 1 à 6, ainsi que la résine formophénolique (Référence) sont utilisées pour former des produits d'isolation à base de laine de verre.

On fabrique de la laine de verre par la technique de la centrifugation interne dans laquelle la composition de verre fondu est transformée en fibres au moyen d'un outil dénommé assiette de centrifugation, comprenant un panier formant chambre de réception de la composition fondue et une bande périphérique percée d'une multitude d'orifices : l'assiette est mue en rotation autour de son axe de symétrie disposé verticalement, la composition est éjectée à travers les orifices sous l'effet de la force centrifuge et la matière s'échappant des orifices est étirée en fibres avec l'assistance d'un courant de gaz d'étirage.

De façon classique, une couronne de pulvérisation d'encollage est disposée au-dessous de l'assiette de fibrage de façon à répartir régulièrement la composition d'encollage sur la laine de verre venant d'être formée.

La laine minérale ainsi encollée est collectée sur un convoyeur à bande équipé de caissons d'aspiration internes qui retiennent la laine minérale sous forme d'un feutre ou d'une nappe à la surface du convoyeur. Le convoyeur circule ensuite dans une étuve maintenue à 290°C où les constituants de l'encollage polymérisent pour former un liant. Le produit isolant obtenu présente une densité nominale égale à 10,6 kg/$m^3$, une épaisseur nominale d'environ 80 mm et une perte au feu de l'ordre de 5 %.

Les propriétés des produits d'isolation sont données dans le tableau 2.

Les produits d'isolation fabriqués avec les compositions d'encollage des exemples 2 à 5 présentent de meilleures propriétés par rapport au produit de Référence et de l'exemple 6 comparatif en termes de résistance en traction avant vieillissement et une meilleure reprise d'épaisseur après compression pendant 12 jours, 1 mois et 3 mois par rapport à l'exemple 6 comparatif. Ces propriétés sont similaires à celles de l'exemple 1 comparatif contenant uniquement du maltitol.

Les produits selon l'invention sont plus rigides après 1 mois de compression.

## EXEMPLES 7 A 10

On fabrique des produits d'isolation à base de laine de verre dans les mêmes conditions qu'aux exemples 1 à 6, modifiées en ce que l'on utilise les compositions d'encollage figurant dans le tableau 3.

On constate que l'absorption d'eau par le produit de l'exemple 7 est réduite de 26,9 % par rapport au produit ne contenant que du maltitol (exemple 8 comparatif).

La présence de silicone en tant qu'agent hydrofuge dans produit de l'exemple 9 permet de réduire considérablement l'absorption d'eau par rapport à l'exemple 7 (réduction de 84 %). Cette absorption d'eau est diminuée de moitié par rapport au produit de l'exemple 10 comparatif ne contenant que du maltitol.

Tableau 1

| Exemple | 1 (Comp.) | 2 | 3 | 4 | 5 | 6 (Comp.) | Réf. |
|---|---|---|---|---|---|---|---|
| **Composition d'encollage** | | | | | | | |
| Polysorb® 70/12 | - | - | - | - | - | 58 | - |
| Maltilite® P 200 | 44 | - | - | - | - | - | - |
| Maltilite® 5575 | - | 48 | 41 | - | - | - | - |
| Maltilite® 7575 | - | - | - | 47 | 40 | - | - |
| Acide citrique | 56 | 52 | 59 | 53 | 60 | 42 | - |
| Hypophosphite de sodium | 5 | 5 | 5 | 5 | 5 | 5 | - |
| **Propriétés** | | | | | | | |
| Temp. début réticulation $T_R$ (°C) | 144 | 137 | 135 | 132 | 132 | 155 | 144 |
| Viscosité à 25°C (mPa.s) [1] | n.d. | 4,2 | n.d. | 4,9 | n.d. | 6,0 | 6,0 |

Maltilite® P 200 commercialisé par TEREOS : D-maltitol cristallisé Maltilite® 5575 commercialisé par TEREOS : sirop de maltitol à 75 % de matières sèches contenant 55 % de maltitol Maltilite® 7575 commercialisé par TEREOS: sirop de maltitol à 75 % de matières sèches contenant 75 % de maltitol

[1] solution à 40 % de matières solides n. d. : non déterminé

Tableau 2

| Exemple | 1 (Comp.) | 2 | 3 | 4 | 5 | 6 (Comp) | Réf. |
|---|---|---|---|---|---|---|---|
| **Propriétés** | | | | | | | |
| **Résistance en traction (N)** | | | | | | | |
| initiale | 3,2 | 3,0 | 3,1 | 2,9 | 3,0 | 2,4 | 2,6 |
| après vieillissement (RT15) | 1,9 | 1,7 | 2,1 | 1,9 | 1,9 | 1,8 | 2,4 |
| **Epaisseur (mm)** | | | | | | | |
| après 24 heures | 142 | 138 | 142 | 137 | 139 | 139 | 149 |
| après 12 jours | 132 | 127 | 134 | 129 | 128 | 118 | 141 |
| après 1 mois | 133 | 129 | 140 | 132 | 130 | 126 | 144 |
| après 3 mois | 130 | 126 | n. d. | 128 | 127 | 119 | 141 |

n. d. : non déterminé

Tableau 3

| Exemple | 7 | 8 (Comp.) | 9 | 10 (Comp.) |
|---|---|---|---|---|
| **Composition d'encollage** | | | | |
| Maltilite® P 200 | - | 48 | - | 48 |
| Maltilite® 5575 | 48 | - | 48 | - |
| Acide citrique | 52 | 52 | 52 | 52 |
| Hypophosphite de sodium | 5 | 5 | 5 | 5 |
| γ-aminopropyltriéthoxysilane | 1 | 1 | 1 | 1 |
| Huile minérale | 8 | 8 | 8 | 8 |
| Silicone | - | - | 1 | 1 |
| **Propriétés** | | | | |
| Absorption d'eau (kg/m$^2$) | 5,7 | 7,8 | 0,9 | 1,8 |

Maltilite® P 200 commercialisé par TEREOS : D-maltitol cristallisé Maltilite® 5575 commercialisé par TEREOS : sirop de maltitol à 75 % de matières sèches contenant 55 % de maltitol

**Revendications**

1. Composition d'encollage pour des produits isolants à base de laine minérale, notamment de roche ou de verre, **caractérisée en ce qu'**elle comprend

   - un mélange de sucres hydrogénés contenant au moins 25 % en poids de maltitol, calculé sur la base des matières sèches des sucres hydrogénés, et
   - au moins un agent de réticulation polyfonctionnel.

2. Composition selon la revendication 1, **caractérisée en ce que** les sucres hydrogénés sont les produits résultant de la réduction de sucres choisis parmi les monosaccharides, les oligosaccharides et les polysaccharides linéaires, cycliques ou ramifiés.

3. Composition selon la revendication 1 ou 2, **caractérisée en ce que** les sucres hydrogénés sont l'érythritol, l'arabitol, le xylitol, le sorbitol, le mannitol, l'iditol, l'isomaltitol, le lactitol, le cellobitol, le palatinitol, le maltotritol et les produits d'hydrogénation d'hydrolysats d'amidon.

4. Composition selon la revendication 3, **caractérisée en ce que** les sucres hydrogénés sont un produit d'hydrogénation d'hydrolysats d'amidon.

5. Composition selon l'une des revendications 1 à 4, **caractérisée en ce que** les sucres hydrogénés contiennent des sucres réducteurs en une proportion n'excédant pas 5 % en poids (de matières sèches), de préférence 1 % et mieux encore 0,5 %.

6. Composition selon l'une des revendications 1 à 5, **caractérisée en ce que** l'agent de réticulation polyfonctionnel est choisi parmi les acides organiques polycarboxyliques ou les sels de ces acides, les anhydrides et les polyaldéhydes.

7. Composition selon la revendication 6, **caractérisée en ce que** l'acide organique polycarboxylique comprend au moins deux fonctions carboxyliques, de préférence au plus 300 fonctions carboxyliques, avantageusement au plus 70 et mieux encore au plus 15.

8. Composition selon la revendication 7, **caractérisée en ce que** l'acide organique polycarboxylique présente une masse molaire en nombre inférieure ou égale à 50000, de préférence inférieure ou égale à 10000 et avantageusement inférieure ou égale à 5000.

9. Composition selon l'une des revendications 6 à 8, **caractérisée en ce que** l'acide organique polycarboxylique est choisi parmi les acides organiques polycarboxyliques non polymériques acycliques, ramifiés ou non, saturés ou insaturés, les acides cycliques et les acides aromatiques.

10. Composition selon la revendication 9, **caractérisée en ce que** l'acide organique polycarboxylique est choisi parmi les acides dicarboxyliques, notamment l'acide oxalique, l'acide malonique, l'acide succinique, l'acide glutarique, l'acide adipique, l'acide pimélique, l'acide subérique, l'acide azelaïque, l'acide sébacique, l'acide malique, l'acide tartrique, l'acide tartronique, l'acide aspartique, l'acide glutamique, l'acide fumarique, l'acide itaconique, l'acide maléique, l'acide traumatique, l'acide camphorique, l'acide phtalique et ses dérivés, en particulier contenant au moins un atome de bore ou de chlore, l'acide tétrahydrophtalique et ses dérivés, en particulier contenant au moins un atome de chlore, l'acide isophtalique, l'acide téréphtalique, l'acide mésaconique et l'acide citraconique, les acides tricarboxyliques, notamment l'acide citrique, l'acide tricarballylique, l'acide 1,2,4-butanetricarboxylique, l'acide aconitique, l'acide hémimellitique, l'acide triméllitique et l'acide trimésique, et les acides tétracarboxyliques, notamment l'acide 1,2,3,4-butanetétracarboxylique et l'acide pyroméllitique.

11. Composition selon l'une des revendications 6 à 8, **caractérisée en ce que** l'acide organique polycarboxylique est choisi parmi les acides organiques polycarboxyliques polymériques, en particulier les homopolymères d'acide carboxylique insaturé et les copolymères d'au moins un acide carboxylique insaturé et d'au moins un monomère vinylique.

12. Composition selon la revendication 11, **caractérisée en ce que** l'acide carboxylique insaturé est l'acide (méth)acrylique, l'acide crotonique, l'acide isocrotonique, l'acide maléique, l'acide cinnamique, l'acide 2-méthylmaléique, l'acide fumarique, l'acide itaconique, l'acide 2-méthylitaconique, l'acide $\alpha,\beta$-méthylèneglutarique et les monoesters d'acide dicarboxyliques insaturés, et le monomère vinylique est le styrène substitué ou non par des groupements alkyle, hydroxyle ou sulfonyle, ou par un atome d'halogène, le (méth)acrylonitrile, le (méth)acrylamide substitué ou non par des groupements alkyle en $C_1$-$C_{10}$, les alkyl (méth)acrylates, le (méth)acrylate de glycidyle, le butadiène et un ester vinylique.

**13.** Composition selon la revendication 6, **caractérisée en ce que** l'anhydride est l'anhydride maléique, l'anhydride succinique ou l'anhydride phtalique.

**14.** Composition selon la revendication 6, **caractérisée en ce que** le polyaldehyde est un dialdéhyde non polymérique, notamment le glyoxal, le glutaraldéhyde, le 1,6-hexanedial ou le dialdéhyde 1,4-téréphtalique.

**15.** Composition selon la revendication 14, **caractérisée en ce que** les fonctions aldéhyde du polyaldehyde sont bloquées par de l'urée ou par des urées cycliques.

**16.** Composition selon l'une des revendications 1 à 15, **caractérisée en ce que** les sucres hydrogénés représentent 10 à 90 % du poids du mélange constitué par les sucres hydrogénés et l'agent de réticulation polyfonctionnel, de préférence au moins 20 %, notamment 20 à 85 %, et avantageusement au moins 30 %, notamment 30 à 80 %.

**17.** Composition selon l'une des revendications 1 à 16, **caractérisée en ce qu'**elle comprend en outre un catalyseur choisi parmi les acides et les bases de Lewis, les composés contenant du phosphore et les composés contenant du fluor et du bore.

**18.** Composition selon la revendication 17, **caractérisée en ce que** le catalyseur représente jusqu'à 20 % du poids des sucres hydrogénés et de l'agent de réticulation polyfonctionnel, de préférence jusqu'à 10 % et avantageusement au moins 1 %.

**19.** Composition selon l'une des revendications 1 à 17, **caractérisée en ce qu'**elle comprend en outre les additifs ci-après dans les proportions suivantes calculées sur la base de 100 parts en poids des sucres hydrogénés et d'agent de réticulation polyfonctionnel :

- 0 à 2 parts de silane, en particulier un aminosilane,
- 0 à 20 parts d'huile, de préférence 4 à 15 parts,
- 0 à 5 parts d'un agent hydrophobe, en particulier un silicone,
- 0 à 20 parts d'un polyol différent des sucres hydrogénés,
- 0 à 30 parts d'urée, de préférence 0 à 20 parts,
- 0 à 30 parts d'un « extendeur » choisi parmi les dérivés de la lignine tels que le lignosulfonate d'ammonium (LSA) ou le lignosulfonate de sodium, et les protéines animales ou végétales.

**20.** Produit isolant acoustique et/ou thermique à base laine minérale, notamment de verre ou de roche, encollée à l'aide de la composition d'encollage selon l'une des revendications 1 à 19.

**21.** Voile de fibres minérales, notamment de verre ou de roche, encollées à l'aide de la composition d'encollage selon l'une des revendications 1 à 19.


**Patentansprüche**

**1.** Bindemittel-Zusammensetzung für Dämmstoffe auf Basis von Mineralwolle, insbesondere Steinwolle oder Glaswolle, **dadurch gekennzeichnet, dass** sie umfasst

- ein Gemisch hydierter Zucker, das mindestens 25 Gew.-% Maltitol enthält, berechnet auf der Basis der Trockenmassen der hydrierten Zucker, und
- mindestens ein polyfunktionelles Vernetzungsmittel.

**2.** Zusammensetzung nach Anspruch 1, **dadurch gekennzeichnet, dass** die hydrierten Zucker aus Hydrierungsprodukten von Monosacchariden, Oligosacchariden und linearen, cyclischen oder verzweigten Polysacchariden ausgewählt sind.

3. Zusammensetzung nach Anspruch 1 oder 2, **dadurch gekennzeichnet, dass** die hydrierten Zucker Erythritol, Arabitol, Xylitol, Sorbitol, Mannitol, Iditol, Isomaltitol, Lactitol, Cellobitol, Palatinitol, Maltotritol und Hydrierungsprodukte von Stärkehydrolysaten sind.

4. Zusammensetzung nach Anspruch 3, **dadurch gekennzeichnet, dass** die hydrierten Zucker ein Hydrierungsprodukt von Stärkehydrolysaten sind.

5. Zusammensetzung nach einem der Ansprüche 1 bis 4, **dadurch gekennzeichnet, dass** die hydrierten Zucker reduzierende Zucker in einem Anteil von höchstens 5 Gew.-% (Trockenmasse), vorzugsweise 1 % und noch besser 0,5 %, enthalten.

6. Zusammensetzung nach einem der Ansprüche 1 bis 5, **dadurch gekennzeichnet, dass** das polyfunktionelle Vernetzungsmittel aus den organischen Polycarbonsäuren oder den Salzen dieser Säuren, den Anhydriden und den Polyaldehyden ausgewählt ist.

7. Zusammensetzung nach Anspruch 6, **dadurch gekennzeichnet, dass** die organische Polycarbonsäure mindestens zwei Carboxylfunktionen, vorzugsweise höchstens 300 Carboxylfunktionen, in vorteilhafter Weise höchstens 70 Carboxylfunktionen und noch besser höchstens 15 umfasst.

8. Zusammensetzung nach Anspruch 7, **dadurch gekennzeichnet, dass** die organische Polycarbonsäure eine zahlenmäßige molare Masse von unter oder gleich 50000, von vorzugsweise unter oder gleich 10000 und in vorteilhafter Weise von unter oder gleich 5000 aufweist.

9. Zusammensetzung nach einem der Ansprüche 6 bis 8, **dadurch gekennzeichnet, dass** die organische Polycarbonsäure aus den acyclischen, verzweigten oder nicht verzweigten, gesättigten oder ungesättigten, nicht-polymeren organischen Polycarbonsäuren, den cyclischen Säuren und den aromatischen Säuren ausgewählt ist.

10. Zusammensetzung nach Anspruch 9, **dadurch gekennzeichnet, dass** die organische Polycarbonsäure aus den Dicarbonsäuren, insbesondere Oxalsäure, Malonsäure, Bernsteinsäure, Glutarsäure, Adipinsäure, Pimelinsäure, Korksäure, Azelainsäure, Sebacinsäure, Apfelsäure, Weinsäure, Tartronsäure, Asparaginsäure, Glutaminsäure, Fumarsäure, Itaconsäure, Maleinsäure, Traumasäure, Camphersäure, Phthalsäure und deren Derivaten, die insbesondere mindestens ein Bor- oder Chloratom enthalten, Tetrahydrophthalsäure und deren Derivaten, die insbesondere mindestens ein Chloratom enthalten, Isophthalsäure, Terephthalsäure, Mesaconsäure und Citraconsäure, Tricarbonsäuren, insbesondere Zitronensäure, Tricarballylsäure, 1,2,4-Butantricarbonsäure, Aconitsäure, Hemimellitsäure, Trimellitsäure und Trimesinsäure und den Tetracarbonsäuren, insbesondere 1,2,3,4-Butantetracarbonsäure und Pyromellitsäure, ausgewählt ist.

11. Zusammensetzung nach einem der Ansprüche 6 bis 8, **dadurch gekennzeichnet, dass** die organische Polycarbonsäure aus den polymeren organischen Polycarbonsäuren, insbesondere den Homopolymeren von ungesättigter Carbonsäure und den Copolymeren von mindestens einer ungesättigten Carbonsäure und von mindestens einem Vinylmonomer ausgewählt ist.

12. Zusammensetzung nach Anspruch 11, **dadurch gekennzeichnet, dass** die ungesättigte Carbonsäure (Meth)acrylsäure, Crotonsäure, Isocrotonsäure, Maleinsäure, Zimtsäure, 2-Methylmaleinsäure, Fumarsäure, Itaconsäure, 2-Methylitaconsäure, $\alpha,\beta$-Methylenglutarsäure und Monoester von ungesättigten Dicarbonsäuren ist, und das Vinylmonomer Styrol ist, substituiert oder nicht substituiert durch Alkyl-, Hydroxyl- oder Sulfonylgruppen oder durch ein Halogenatom, (Meth)acrylonitril, (Meth)acrylamid, substituiert oder nicht substituiert durch $C_1$-$C_{10}$-Alkylgruppen, Alkyl(meth)acrylate, Glycidyl(meth)acrylat, Butadien und einen Vinylester.

13. Zusammensetzung nach Anspruch 6, **dadurch gekennzeichnet, dass** das Anhydrid Maleinanhydrid, Bernsteinanhydrid oder Phthalanhydrid ist.

14. Zusammensetzung nach Anspruch 6, **dadurch gekennzeichnet, dass** das Polyaldehyd ein nicht-polymeres Dialdehyd, insbesondere Glyoxal, Glutaraldehyd, 1,6-Hexandial oder 1,4-Terephthaldialdehyd ist.

15. Zusammensetzung nach Anspruch 14, **dadurch gekennzeichnet, dass** die Aldehydfunktionen des Polyaldehyds durch Harnstoff oder cyclische Harnstoffe blockiert sind.

16. Zusammensetzung nach einem der Ansprüche 1 bis 15, **dadurch gekennzeichnet, dass** die hydrierten Zucker 10 bis 90 % des Gewichts des Gemischs, gebildet aus den hydrierten Zuckern und dem polyfunktionellen Vernetzungsmittel, vorzugsweise mindestens 20 %, insbesondere 20 bis 85 %, und in vorteilhafter Weise mindestens 30 %, insbesondere 30 bis 80 %, betragen.

17. Zusammensetzung nach einem der Ansprüche 1 bis 16, **dadurch gekennzeichnet, dass** sie ferner einen Katalysator umfasst, der aus Lewis-Säuren und -Basen, Phosphor enthaltenden Verbindungen und Fluor und Bor enthaltenden Verbindungen ausgewählt ist.

18. Zusammensetzung nach Anspruch 17, **dadurch gekennzeichnet, dass** der Katalysator bis zu 20 % des Gewichts der hydrierten Zucker und des polyfunktionellen Vernetzungsmittels, vorzugsweise bis zu 10 % und in vorteilhafter Weise mindestens 1 %, ausmacht.

19. Zusammensetzung nach einem der Ansprüche 1 bis 17, **dadurch gekennzeichnet, dass** sie ferner die nachstehenden Additive in den folgenden Anteilen umfasst, berechnet auf der Basis von 100 Gewichtsteilen hydrierter Zucker und polyfunktionellen Vernetzungsmittels:

- 0 bis 2 Teile Silan, insbesondere Aminosilan,
- 0 bis 20 Teile, vorzugsweise 4 bis 15 Teile, Öl,
- 0 bis 5 Teile eines hydrophoben Mittels, insbesondere ein Silicon,
- 0 bis 20 Teile eines Polyols, das sich von den hydrierten Zuckern unterscheidet,
- 0 bis 30 Teile, vorzugsweise 0 bis 20 Teile, Harnstoff, ,
- 0 bis 30 Teile eines "Streckmittels", ausgewählt aus den Derivaten des Lignins wie etwa dem Ammonium-Lignosulfonat (ALS) oder dem Natrium-Lignosulfonat und den tierischen oder pflanzlichen Proteinen.

20. Schall- und/oder Wärmedämmstoff auf Basis von Mineralwolle, insbesondere Glaswolle oder Steinwolle, gebunden mithilfe der Bindemittel-Zusammensetzung nach einem der Ansprüche 1 bis 19.

21. Mineralfaservlies, insbesondere aus Glaswolle oder Steinwolle, gebunden mithilfe der Bindemittel-Zusammensetzung nach einem der Ansprüche 1 bis 19.

**Claims**

1. A sizing composition for insulating products based on mineral wool, in particular of rock or of glass, **characterized in that** it comprises:

- a mixture of hydrogenated sugars comprising at least 25% by weight of maltitol, calculated on the basis of the dry matter of the hydrogenated sugars, and
- at least one polyfunctional crosslinking agent.

2. The composition as claimed in claim 1, **characterized in that** the hydrogenated sugars are products resulting from the reduction of a sugar chosen from monosaccharides, oligosaccharides and linear, cyclic or branched polysaccharides.

3. The composition as claimed in claim 1 or 2, **characterized in that** the hydrogenated sugars are erythritol, arabitol, xylitol, sorbitol, mannitol, iditol, isomaltitol, lactitol, cellobitol, palatinitol, maltotritol and the products from the hydrogenation of starch hydrolyzates.

4. The composition as claimed in claim 3, **characterized in that** the hydrogenated sugars are a product from the hydrogenation of starch hydrolyzates.

5. The composition as claimed in one of claims 1 to 4, **characterized in that** the hydrogenated sugars comprise reducing sugars in a proportion not exceeding 5% by weight (on a dry basis), preferably 1% by weight and better still 0.5% by weight.

6. The composition as claimed in one of claims 1 to 5, **characterized in that** the polyfunctional crosslinking agent is chosen from organic polycarboxylic acids or the salts of these acids, the anhydrides and the polyaldehydes.

7. The composition as claimed in claim 6, **characterized in that** the organic polycarboxylic acid comprises at least two carboxyl functional groups, preferably at most 300 carboxyl functional groups, advantageously at most 70 carboxyl functional groups and better still at most 15 carboxyl functional groups.

8. The composition as claimed in claim 7, **characterized in that** the organic polycarboxylic acid exhibits a number-average molar mass of less than or equal to 50 000, preferably of less than or equal to 10 000 and advantageously of less than or equal to 5000.

9. The composition as claimed in one of claims 6 to 8, **characterized in that** the organic polycarboxylic acid is chosen from saturated or unsaturated and linear or branched acyclic nonpolymeric organic polycarboxylic acids, cyclic acids and aromatic acids.

10. The composition as claimed in claim 9, **characterized in that** the organic polycarboxylic acid is chosen from dicarboxylic acids, in particular oxalic acid, malonic acid, succinic acid, glutaric acid, adipic acid, pimelic acid, suberic acid, azelaic acid, sebacic acid, malic acid, tartaric acid, tartronic acid, aspartic acid, glutamic acid, fumaric acid, itaconic acid, maleic acid, traumatic acid, camphoric acid, phthalic acid and its derivatives, in particular comprising at least one boron or chlorine atom, tetrahydrophthalic acid and its derivatives, in particular comprising at least one chlorine atom, isophthalic acid, terephthalic acid, mesaconic acid and citraconic acid, tricarboxylic acids, in particular citric acid, tricarballylic acid, 1,2,4-butanetricarboxylic acid, aconitic acid, hemimellitic acid, trimellitic acid and trimesic acid, and tetracarboxylic acids, in particular 1,2,3,4-butanetetracarboxylic acid and pyromellitic acid.

11. The composition as claimed in one of claims 6 to 8, **characterized in that** the organic polycarboxylic acid is chosen from polymeric organic polycarboxylic acids, in particular homopolymers of unsaturated carboxylic acids and copolymers of at least one unsaturated carboxylic acid and of at least one vinyl monomer.

12. The composition as claimed in claim 11, **characterized in that** the unsaturated carboxylic acid is (meth)acrylic acid, crotonic acid, isocrotonic acid, maleic acid, cinnamic acid, 2-methylmaleic acid, fumaric acid, itaconic acid, 2-methylitaconic acid, $\alpha,\beta$-methyleneglutaric acid and unsaturated dicarboxylic acid monomers, and the vinyl monomer is unsubstituted styrene or styrene substituted by alkyl, hydroxyl or sulfonyl groups or by a halogen atom, (meth)acrylonitrile, unsubstituted (meth)acrylamide or (meth)acrylamide substituted by $C_1$-$C_{10}$ alkyl groups, alkyl (meth)acrylates, glycidyl (meth)acrylate, butadiene and a vinyl ester.

13. The composition as claimed in claim 6, **characterized in that** the anhydride is maleic anhydride, succinic anhydride or phthalic anhyride.

14. The composition as claimed in claim 6, **characterized in that** the polyaldehyde is a nonpolymeric dialdehyde, in particular glyoxal, glutaraldehyde, 1,6-hexanedial or 1,4-terephthalaldehyde.

15. The composition as claimed in claim 14, **characterized in that** the aldehyde functional groups of the polyaldehyde are masked by urea or by cyclic ureas.

16. The composition as claimed in one of claims 1 to 15, **characterized in that** the hydrogenated sugars represent from 10 to 90% of the weight of the mixture composed of the hydrogenated sugars and the polyfunctional crosslinking agent, preferably at least 20%, in particular from 20 to 85%, advantageously at least 30%, in particular from 30 to 80%.

17. The composition as claimed in one of claims 1 to 16, **characterized in that** it additionally comprises a catalyst chosen from Lewis acids and bases, phosphorus-comprising compounds and compounds comprising fluorine and boron.

18. The composition as claimed in claim 17, **characterized in that** the catalyst represents up to 20% of the weight of the hydrogenated sugars and polyfunctional crosslinking agent, preferably up to 10%, and advantageously at least 1%.

19. The composition as claimed in one of claims 1 to 17, **characterized in that** it additionally comprises the additives below in the following proportions, calculated on the basis of 100 parts by weight of the hydrogenated sugars and polyfunctional crosslinking agent:

- from 0 to 2 parts of silane, in particular an aminosilane,

- from 0 to 20 parts of oil, preferably from 4 to 15 parts,
- from 0 to 5 parts of a hydrophobic agent, in particular silicone,
- from 0 to 20 parts of a polyol other than the hydrogenated sugars,
- from 0 to 30 parts of urea, preferably from 0 to 20 parts,
- from 0 to 30 parts of an "extender" chosen from lignin derivatives, such as ammonium lignosulfate (ALS) or sodium lignosulfate, and animal or plant proteins.

20. An acoustic and/or thermal insulating product based on mineral wool, in particular of glass or of rock, sized using the sizing composition as claimed in one of claims 1 to 19.

21. A veil of mineral fibers, in particular of glass or of rock, sized using the sizing composition as claimed in one of claims 1 to 19.

E (MPa)

Début de réticulation $T_R$    Température (°C)

Figure 1

EP 2 736 995 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5340868 A
- US 5318990 A
- US 5661213 A
- US 6331350 B
- US 20030008978 A
- US 5977232 A
- US 5932689 A
- US 6071994 A
- US 6099773 A
- US 6146746 A
- US 6299936 B
- US 20020091185 A
- US 20020188055 A
- US 20040002567 A
- US 20050215153 A
- WO 2006120523 A
- WO 2008053332 A
- WO 2010029266 A
- WO 0196254 A1